Europäisches Patentamt

European Patent Office

Office européen des brevets

(19)

(11) Veröffentlichungsnummer: **0 205 776**
**B1**

(12)

# EUROPÄISCHE PATENTSCHRIFT

(45) Veröffentlichungstag der Patentschrift:
24.05.89

(51) Int. Cl.⁴: **B 23 K 37/04**

(21) Anmeldenummer: 86104194.5

(22) Anmeldetag: 26.03.86

(54) Vorrichtung zum Zentrieren von miteinander zu verschweissenden Rohrstössen.

(30) Priorität: 19.06.85 DE 8517759 U

(43) Veröffentlichungstag der Anmeldung:
30.12.86 Patentblatt 86/52

(45) Bekanntmachung des Hinweises auf die Patenterteilung:
24.05.89 Patentblatt 89/21

(84) Benannte Vertragsstaaten:
AT BE CH DE FR GB IT LI LU NL SE

(56) Entgegenhaltungen:
DE-U- 8 324 338

(73) Patentinhaber: Werner, Jankus, Unterer Weg 6,
D-4600 Dortmund 30 (DE)

(72) Erfinder: Werner, Jankus, Unterer Weg 6,
D-4600 Dortmund 30 (DE)

(74) Vertreter: Niemann, Uwe, Dr.-Ing., Ahornstrasse 41,
D-4300 Essen 1 (DE)

## Beschreibung

Die Erfindung betrifft eine Vorrichtung zum Zentrieren von miteinander zu verschweißenden Rohrstößen, — mit zwei bogenförmigen Bügeln, die an einander gegenüberliegenden Seiten einer Konsole angelenkt sind, mit einer Spannschraube, die in einer Gewindebohrung der Konsole geführt ist und die auf einer an den Bügeln geführten Traverse abgestützt ist, sowie mit Zentrierstützen an den Bügeln und an der Traverse, wobei die mit einem Rohrstoß verspannbaren Zentrierstützen sich in axialer Richtung bis über den anderen Rohrstoß erstrecken und auch mit diesem durch gegen dessen Umfang gerichtete Zentrierschrauben verspannbar sind.

Eine Vorrichtung dieser Gattung ist bekannt (DE-U1 83 24 338). Sie eignet sich insbesondere zum Zentrieren von dickwandigen Rohren kleinerer Durchmesser, z.B. DN < 100 mm. Durch die Gelenkführung der Bügel und insbesondere durch eine Lenkerführung der Traverse an den Bügeln werden die Zentrierstützen so geführt, daß sie auch bei unterschiedlichen Durchmessern der Rohrstöße im wesentlichen gleichmäßig über den Umfang des Rohrstoßes verteilt an diesem angreifen. Um das zu erreichen, muß allerdings die Lenkerführung zwischen den Bügeln und der Traverse sehr präzise arbeiten. Das erfordert einen entsprechenden Aufwand bei Konstruktion und Fertigung.

Aufgabe der Erfindung ist es demgegenüber, eine gattungsgemäße Vorrichtung zu vereinfachen.

Diese Aufgabe wird dadurch gelöst, daß die Außenseiten der Bügel als Steuerkurven ausgebildet sind, daß die Traverse beidseits von der Zentrierstütze ausgehende Kragarmpaare aufweist, die sich im wesentlichen senkrecht zur Zentrierstütze erstrecken, und daß die Enden der Kragarmpaare jedes Kragarmpaares durch daran gelagerte Rollen verbunden sind, welche auf den Steuerkurven der Bügel geführt sind. Bei dieser Vorrichtung haben die Bügel und die Traverse eine Doppelfunktion. Einerseits bilden sie eine Spanneinrichtung, mit der die den Zentrierschrauben abgewandten Enden der Zentrierstützen auf dem zugeordneten Rohrstoß verspannt werden können, andererseits übernehmen sie aber auch die Steuerfunktion, so daß zusätzliche Lenker überflüssig werden.

Insbesondere bei einer Ausführung, die nur drei Zentrierstützen aufweist, kann die Krümmung der Bügel und ihrer Steuerkurven so ausgelegt werden, daß im Spannbereich die Zentrierstützen unter Winkeln von ca. 120° zueinander angeordnet sind. Dann ergibt sich eine gleichmäßige Verteilung der Zentrierstützen über den Umfang des Rohrstoßes und auch eine gleichmäßige Verteilung der Zentrierkräfte.

Um zu verhindern, daß beim Anziehen der Zentrierschrauben die Zentrierstützen gegen den Rohrstoß kippen, auf dem sie verspannt sind, sollten die Zentrierstützen auf ihren den Zentrierschrauben gegenüberliegenden Enden einen Stützwulst aufweisen.

Im folgenden wird ein in der Zeichnung dargestelltes Ausführungsbeispiel der Erfindung erläutert; es zeigen:

Fig. 1 eine Ansicht einer Vorrichtung zum Zentrieren von miteinander zu verschweißenden Rohrstößen,

Fig. 2 die Ansicht einer Traverse,

Fig. 3 eine Draufsicht auf den Gegenstand nach Fig. 2,

Fig. 4 die Ansicht eines Bügels,

Fig. 5 eine Draufsicht auf den Gegenstand nach Fig. 4.

Zu der dargestellten Vorrichtung gehören zwei Bügel 1, 2, deren eines Ende jeweils an gegenüberliegenden Seiten einer Konsole 3 in einem zugeordneten Gelenklager 4 bzw. 5 gelagert ist. Die Konsole 3 weist eine mittige Gewindebohrung für eine darin geführte Spannschraube 6 mit Handhabe 7 auf. Das freie Ende der Spannschraube 6 stützt sich auf einer Traverse 8 ab, zu der zwei in entgegengesetzte Richtungen weisende Kragarmpaare mit Kragarmen 9, 10 bzw. 11, 12 gehören. Die Enden der Kragarme 9, 10 bzw. 11, 12 jedes Kragarmpaares sind über darin gelagerte Rollen 13 bzw. 14 verbunden. Die Rollen sind auf den als Steuerkurven 15 bzw. 16 ausgebildeten Außenseiten der Bügel 1, 2 geführt.

An die freien Enden der Bügel 1, 2 sowie an den mittigen Bereich der Traverse 8 sind Zentrierstützen 17 angeformt, die sich im wesentlichen parallel zu den Achsen der Gelenklager 4, 5 und/oder Rollen 13, 14 erstrecken. Die Zentrierstützen 17 weisen jeweils an einem Ende einen Stützwulst 18 und am anderen Ende eine Gewindebohrung 19 für eine darin geführte Zentrierschraube 20 auf. Die Zentrierschrauben 20 sind bei der dargestellten Ausführung als Flügelschrauben ausgebildet.

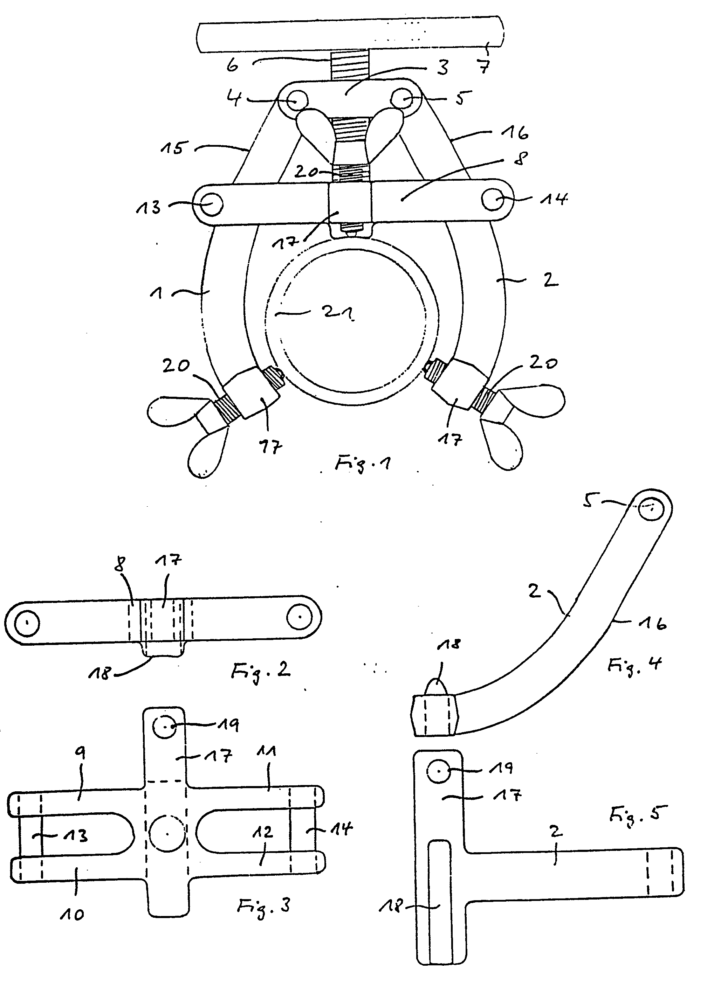

Wie man insbesondere aus den Fig. 1 und 4 entnimmt, sind die Bügel 1, 2 in Anpassung an einen zu zentrierenden Rohrstoß 21 aufeinanderzu gekrümmt, wobei die Krümmung der Bügel 1, 2 und ihrer Steuerkurven 15, 16 so ausgelegt sind, daß im Spannbereich die Zentrierstützen 17 unter Winkeln von ca. 120° zueinander angeordnet sind.

Die dargestellte Vorrichtung arbeitet wie folgt: Bei gelöster Spannschraube 6 werden die Bügel 1, 2, wie dargestellt, über einen Rohrstoß 21 gesetzt, wobei sich auch die Zentrierstütze 17 der Traverse 8 auf dem Außenumfang des Rohrstoßes 21 abstützt. Beim Anziehen der Spannschraube 6 werden die Rollen 13, 14 an den Enden der Traverse 8 auf den Steuerkurven 15, 16 geführt. Dabei werden die Zentrierstützen 17 mit ihren Stützwulsten 18 gegen den Rohrstoß 21 verspannt. Die Zentrierstützen 17 erstrecken sich bis über den nächsten, nicht dargestellten Rohrstoß, mit dem der Rohrstoß 21 verschweißt werden soll. Durch Anziehen der Zentrierschrauben 20 kann nunmehr der andere Rohrstoß ausgerichtet und zentriert werden.

## Patentansprüche

1. Vorrichtung zum Zentrieren von miteinander verschweißenden Rohrstößen, — mit zwei bogenförmigen Bügeln (1, 2), die an einander gegenüberliegenden Seiten einer Konsole (3) angelenkt sind, mit einer Spannschraube (6), die in einer Gewindebohrung der Konsole (3) geführt ist und die auf einer an den Bügeln (1, 2) geführten Traverse (8) abgestützt ist, sowie mit Zentrierstützen (17) an den Bügeln (1, 2) und an der Traverse (8), wobei die mit einem Rohrstoß (21) verspannbaren Zentrierstützen (17) sich in axialer Richtung bis über den anderen Rohrstoß erstrecken und auch mit diesem durch gegen dessen Umfang gerichtete Zentrierschrauben (20) verspannbar sind, dadurch gekennzeichnet, daß die Außenseite der Bügel (1, 2) als Steuerkurven (15, 16) ausgebildet sind, daß die Traverse (8) beidseits von der Zentrierstütze (17) ausgehende Kragarmpaare (9, 10; 11, 12) aufweist, die sich im wesentlichen senkrecht zur Zentrierstütze (17) erstrecken, und daß die Enden der Kragarme (9, 10; 11, 12) jedes Kragarmpaares durch daran gelagerte Rollen (13, 14) verbunden sind, welche auf den Steuerkurven (15, 16) der Bügel (1, 2) geführt sind.

2. Vorrichtung nach Anspruch 1, dadurch gekennzeichnet, daß die Krümmung der Bügel (1, 2) und ihrer Steuerkurven (15, 16) so ausgelegt ist, daß im Spannbereich die Zentrierstützen (17) unter Winkeln von ca. 120° zueinander angeordnet sind.

## Claims

1. Device, for the centring of tube lengths to be welded together, with two arcuate clamping members (1, 2), which are hinged at mutually opposite ends of a bracket (3), with a tightening screw (6), which is guided in a threaded bore of the bracket (3) and bears on a crosstie (8) guided at the clamping members (1, 2), as well as with centring supports (17) at the clamping members (1, 2) and at the crosstie (8), wherein the centring supports (17) tightenable with a tube lenght (21) extend in axial direction to cover the other tube length and are tightenable also with this by centring screws (20) directed towards its circumference, characterised thereby, that the outward sides of the clamping members (1, 2) are constructed as control cams (15, 16), that the crosstie (8) displays cantilever arm pairs (9, 10; 11, 12) emanating from the centring support (17) at both sides and extending substantially perpendicularly to the centring support (17) and that the ends of the cantilever arms (9, 10; 11, 12) of each cantilever arm pair are connected by rollers (13, 14), which are borne thereat and guided on the control cams (15, 16) of the clamping members (1, 2).

2. Device according to claim 1, characterised thereby, that the curvature of the clamping members (1, 2) and their control cams (15, 16) is so designed that the centring supports (17) are arranged at angles of about 120° one relative to the other in the clamping range.

## Revendications

1. Equipment pour le centrage de bords te tubes devant être soudés entre eux, — comprenant deux étriers (1, 2) en arc de cercle, articulés sur des côtés mutuellement opposés d'une console (3); une vis de serrage (6) guidée dans un trou taraudé de la console (3), et prenant appui sur une entretoise (8) guidée sur les étriers (1, 2); ainsi que des soutiens de centrage (17) ménagés sur les étriers (1, 2) et sur l'entretoise (8), les soutiens de centrage (17), pouvant être bloqués avec un bord (21) de tube, s'étendant dans le sens axial jusqu'au-dessus de l'autre bord de tube, et pouvant également être bloqués avec ce dernier, par l'intermédiaire de vis de centrage (20) dirigées vers son pourtour, caractérisé par le fait que les faces externes des étriers (1, 2) sont réalisées sous la forme de cames de commande (15, 16); par le fait que l'entretoise (8) présente des paires de bras en porte-à-faux (9, 10; 11, 12) qui partent, des deux côtés, du soutien de centrage (17) et s'étendent, pour l'essentiel, perpendiculairement à ce soutien de centrage (17); et par le fait que les extrémités des bras en porte-à-faux (9, 10; 11, 12) de chaque paire de bras en porte-à-faux sont reliées par l'entremise de rouleaux (13, 14) qui y sont montés, et sont guidés sur les cames de commande (15, 16) des étriers (1, 2).

2. Equipement selon la revendication 1, caractérisé par le fait que la courbure des étriers (1, 2) et de leurs cames de commande (15, 16) est étudiée de telle sorte que, dans la zone d'ablocage, les soutiens de centrage (17) soient agencés mutuellement selon des angles d'environ 120°.

Fig.1

Fig.2

Fig.3

Fig.4

Fig.5